# EUROPEAN PATENT SPECIFICATION

(11) **EP 0 449 814 B1**
(45) Date of publication and mention of the grant of the patent: **30.06.1993**
(21) Application number: 89904539.7
(22) Date of filing: 21.04.1989
(51) Int. Cl.: G03B 21/16

(54) **OVERHEAD PROJECTOR**
ARBEITSPROJEKTOR
RETROPROJECTEUR

(30) Priority: 22.04.1988 DE 8805355 U
(43) Date of publication of application: 09.10.1991
(73) Proprietor: KODAK AKTIENGESELLSCHAFT, D-70323 Stuttgart (DE); EASTMAN KODAK COMPANY, Rochester, New York 14650-2201 (US)
(72) Inventor: ORT, Wolfgang, D-7000 Stuttgart 50 (DE)
(74) Representative: Lewandowsky, Klaus, Dipl.-Ing.
(86) International application number: EP8900437
(87) International publication number: WO8910582

(56) References cited:
- WO-A-87/07394

## Description

The innovation relates to an overhead projector comprising a writing pad, liquid crystal display element on the writing pad, surrounded by a frame, and provided with light-polarizing layers on both sides, the projector also comprising an optical imaging system and a lamp and reflector arrangement accommodated in the projector housing.

The application of liquid crystal display elements (LCD's) enclosed in a frame and used for data projection by placing said LCD's onto the writing pad of commercially available overhad projectors is known from DE-A 27 00 593.

LCD's consist of two glass plates which are slightly spaced from each other to enclose the liquid crystal therebetween. On their inner surfaces, the glass plates are provided with transparent, electrically conductive electrodes. Their outer surfaces carry polarizers made of plastic material the polarisation planes of which are generally oriented by 90° with respect to each other.

When applying large-area LCD's which are enclosed in frames and used for computer data projection such as texts, graphs and figures, the extremely temperature-sensitive LCD may heat rapidly. This causes speckle formation and thus the projected images become illegible. Heating is caused substantially by the two polarizing filters absorbing the heat produced by the projection lamp up to 70 % and transferring the heat directly to the liquid crystal. Moreover, the overhead projector may be additionally heated due to the fact that the panel itself reflects the heat back into the housing of the overhead projector, so that it turns off automatically provided an overheat protector is installed. Such events are very annoying during a presentation. For this reason, large-area LCD panels are cooled by a blower arranged in a housing of the frame carrying the LCD element.

It is the object of the innovation to eliminate all radiation emitted by the light source and not used for illuminating the LCD when projecting an image.

According to the innovation, the above object is attained in that the frame has a surface facing the writing pad which is a reflective surface arranged at an angle with respect to the writing pad, so that the light rays emitted by the lamp and incident on said reflective surface are directed into the free space outside the projector housing.

Other features and advantages will be apparent from the sub-claims and the description of an embodiment with reference to the drawing.
- Fig. 1: shows a perspective view of an overhead projector provided with the LCD panel according to the innovation;
- Fig. 2: shows a cross-sectional view of the upper portion of the projector housing with the LCD panel, and
- Fig. 3: shows a cross-section of the LCD panel according to Fig. 2 along the line I-I.

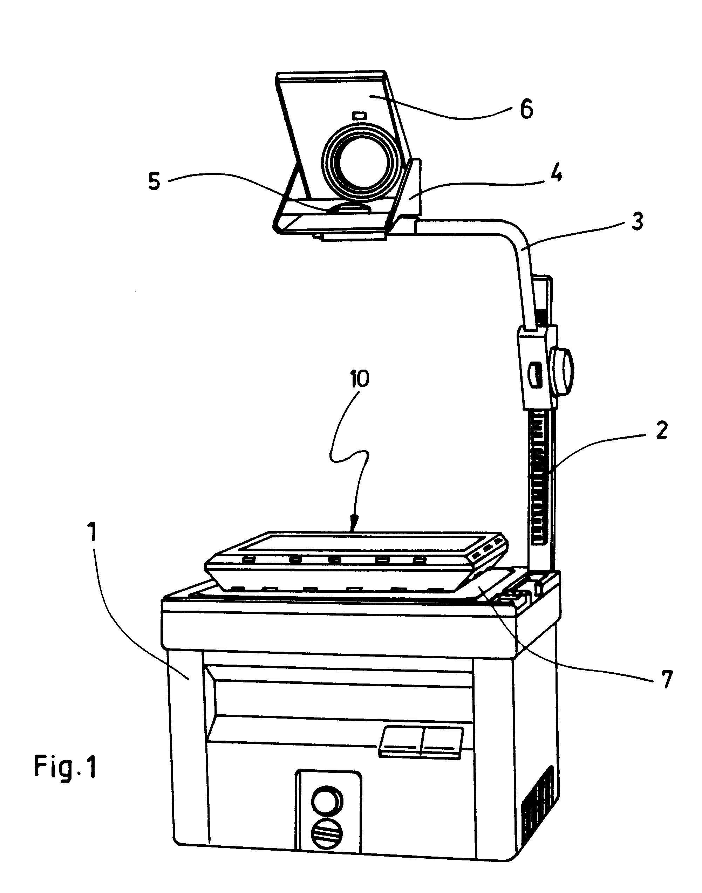

Fig. 1 shows an overhead projector of the transmission type consisting of a housing 1 in which a lamp and reflector arrangement (not illustrated) of a known type is accommodated and to one outer wall a post 2 is fixed in upright position. A holder 4 receiving a projection lens 5 and mirror 6 is mounted to post 2 by means of a supporting arm 3 so as to be adjustable in height. The writing pad is designated 7 upon which a frame 10 is placed in which an LCD element is retained.

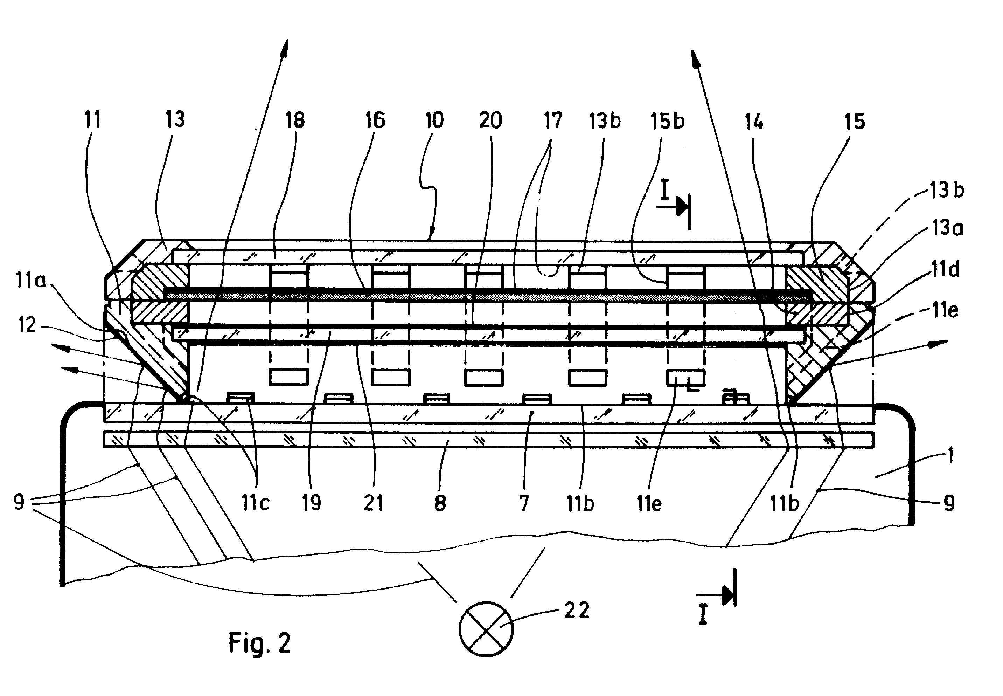

Fig. 2 shows the upper section of the projector housing 1 including the writing pad 7 and a Fresnel lens 8. The lamp is indicated by the numeral 22.

Frame 10 is formed by a lower frame portion 11 and an upper frame portion 13. The inner wall of said upper frame portion 13 is provided with a recess 13a in which a retaining frame 15 is inserted. In said frame 15 an LCD element 16 is embedded whose surface facing away from lamp 22 carries a polarizing sheet 17. In certain embodiments, said polarizing sheet 17 may be arranged so as to be separated from LCD element 16 and applied to a glass plate 18 which is mounted in spaced relation to and above LCD element 16, embedded in the upper frame portion 13 and held in place by the retaining frame 15.

Another glass plate 19 is mounted in spaced relation to and below LCD element 16 on whose surface facing away from lamp 22 a polarizing sheet 20 is applied to. Moreover, on the surface of said glass plate 19 facing lamp 22 an IR radiation absorbing filter 21 is arranged.

Numeral 11d designates a recess which is formed in the lower frame portion 11 and in which a retaining frame 14 is inserted holding glass plate 19 in place.

As can be seen from Fig. 2, the retaining frame 15 is flush with the lower surface of the upper frame portion 13 and the retaining frame 14 is flush with the upper surface of the lower frame portion 11 so that the two interconnected frame portions 11 and 13 are fitted snugly one upon the other.

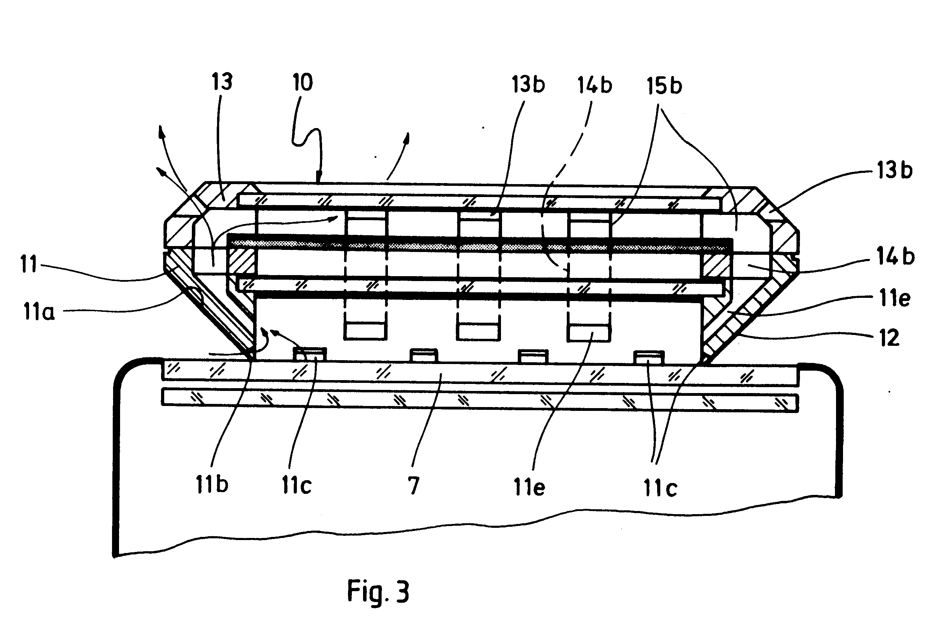

As can be been from Figs. 2 and 3, surface 11a of the lower frame portion facing the writing pad 7 and lying in the range of the radiation emitted by lamps 22 is arranged at an angle such that radiation 9 impinging thereupon is deflected into the free space outside of projector housing 1. It is useful to have a reflecting layer 12 on the frame surface 11a which is arranged at an angle of about 45°. Surface 11a can also be a mirror.

In the narrow edge 11b of the lower frame portion 11 to be placed on the writing pad 7 air entry slots 11c are provided and funnel-shaped air exit slots 13b in the upper frame portion 13. Furthermore, channels 11e are formed in the lower frame portion 11 and recesses 14b and 15b in the retaining frames 14 and 15 inserted in the frame portions 11 and 13. The channels 11e, recesses 14b and 15b and the air exit slots 13b are interconnected and form air channels.

The embodiment shows three air channels each at the end faces and five air channels each at the longitudinal sides of the frame portions 11 and 13. To increase air circulation, it is of course possible to provide a larger number of air channels so that merely webs will remain between the individual air channels.

What is effected by the innovation is that the heat produced by the projection lamp is deflected and that an adequate air flow is possible through the air entry slots and channels to the air exit-slots arranged somewhat higher by utilizing the chimney effect.

## Claims

1. Overhead projector comprising a writing pad (7), a liquid crystal display element (16) on the writing pad (7), surrounded by a frame (10), and provided with light-polarizing layers on both sides, the projector also comprising an optical imaging system (5) and a lamp and reflector arrangement accommodated in the projector housing, **characterized** in that the frame (10) has a surface (11a) facing the writing pad (7) which is a reflective surface arranged at an angle with respect to the writing pad, so that the light rays (9) emitted by the lamp (22) and incident on said reflective surface are directed into the free space outside the projector housing.

2. Overhead projector as described in claim 1, characterized in that a reflective coating (12) is applied to the frame surface (11a).

3. Overhead projector as described in claim 1, characterized in that the frame surface (11a) is a mirror.

4. Overhead projector as described in claim 1, characterized in that said frame (10) is formed by a lower frame portion (11) and an upper frame portion (13).

5. Overhead projector as described in claims 1 and 4, characterized in that a surrounding retaining frame (15) is inserted in the upper frame portion (13) which retaining frame (15) is flush with the lower surface of said upper frame portion (13).

6. Overhead projector as described in claim 5, characterized in that an LCD element (16) is embedded in the retaining frame (15), with the surface of the LCD element facing away from lamp (22) carrying a polarizing sheet (17).

7. Overhead projector as described in claim 6, characterized in that the polarizing sheet (17) is arranged on a glass plate (18) extending in spaced relation above the LCD element (16), inserted in the upper frame portion (13) and held in place by said retaining frame (15).

8. Overhead projector as described in one or several of claims 4 thru 7, characterized in that a glass plate (19) is embedded in the lower frame portion (11) and arranged in spaced relation to the LCD element (16), the surface of glass plate (19) facing away from lamp (22) being provided with a polarizing sheet (20) associated with the LCD element (16).

9. Overhead projector as described in one or several of claims 4 thru 8, characterized in that an IR radiation absorbing filter is applied to the surface of the glass plate (19) facing the lamp (22).

10. Overhead projector as described in claim 8, characterized in that the surrounding retaining frame (14) is inserted in the lower frame portion (11) which frame (14) is flush with the upper surface of the lower frame portion (11) and holds the glass plate (19) arranged in the lower frame portion (11).

11. Overhead projector as described in one or several of claims 1 thru 10, characterized in that air entry slots (11c) are provided in the edge portion (11b), to be placed on the writing pad (7), of the lower frame portion (11) and funnel-shaped air exit slots (13b) in the upper frame portion (13), in that channels (11e) are formed in the lower frame portion (11) and recesses (14b, 15b) in the retaining frames (14, 15) inserted in the frame portions (11, 13), and in that the channels (11e), recesses (14b, 15b) and the air exit slots (13b) are interconnected and form air channels.

## Patentansprüche

1. Arbeitsprojektor mit einer Schreibplatte (7), einer auf die Schreibplatte auflegbaren, in einem Rahmen (10) untergebrachten, beidseitig mit lichtpolarisierenden Schichten versehenen Flüssigkristall-Anzeigeplatte (16), einer Abbildungsoptik (5) sowie einer im Projektorgehäuse untergebrachten Lampen- und Reflektoranordnung, **dadurch gekennzeichnet,** daß der Rahmen (10) eine der Schreibplatte (7) zugekehrte reflektierende Fläche (11a) aufweist, die gegenüber der Schreibplatte derart geneigt ausgebildet ist, daß die von der Lampe (22) ausgehenden und auf die reflektierende Fläche auftreffenden Lichtstrahlen (9) in den freien Raum außerhalb des Projektorgehäuses (1) gelangen.

2. Arbeitsprojektor nach Anspruch 1, dadurch gekennzeichnet, daß auf der Rahmenfläche (11a) ein reflektierender Belag (12) aufgebracht ist.

3. Arbeitsprojektor nach Anspruch 1, dadurch gekennzeichnet, daß die Rahmenfläche (11a) verspiegelt ist.

4. Arbeitsprojektor nach Anspruch 1, dadurch gekennzeichnet, daß der Rahmen (10) von einer unteren Rahmenhälfte (11) und einer oberen Rahmenhälfte (13) gebildet ist.

5. Arbeitsprojektor nach den Ansprüchen 1 und 4, dadurch gekennzeichnet, daß in die obere Rahmenhälfte (13) ein umlaufender Halterahmen (15) eingesetzt ist, der mit der unteren Fläche der oberen Rahmenhälfte (13) bündig abschließt.

6. Arbeitsprojektor nach Anspruch 5, dadurch gekennzeichnet, daß in den Halterahmen (15) eine Flüssigkristall-Anzeigeplatte (16) eingelassen ist, deren von der Lampe (22) abgekehrte Fläche eine Polarisationsfolie (17) trägt.

7. Arbeitsprojektor nach Anspruch 6, dadurch gekennzeichnet, daß die Polarisationsfolie (17) auf einer im Abstand über der Flüssigkristall-Anzeigeplatte (16) verlaufenden, in der oberen Rahmenhälfte (13) eingelassenen und vom Halterahmen (15) gehaltenen Glasplatte (18) aufgebracht ist.

8. Arbeitsprojektor nach einem oder mehreren der Ansprüche 4 bis 7, dadurch gekennzeichnet, daß in der unteren Rahmenhälfte (11) eine im Abstand zur Flüssigkristall-Anzeigeplatte (16) liegende Glasplatte (19) eingelassen ist, auf deren von der Lampe (22) abgekehrten Fläche eine der Flüssigkristall-Anzeigeplatte (16) zugeordnete Polarisationsfolie (20) aufgebracht ist.

9. Arbeitsprojektor nach einem oder mehreren der Ansprüche 4 bis 8, dadurch gekennzeichnet, daß auf der der Lampe (22) zugekehrten Fläche der Glasplatte (19) ein Infrarotfilter aufgebracht ist.

10. Arbeitsprojektor nach Anspruch 8, dadurch gekennzeichnet, daß in die untere Rahmenhälfte (11) ein umlaufender Halterahmen (14) eingesetzt ist, der mit der oberen Fläche der unteren Rahmenälfte (11) bündig abschließt und die in der unteren Rahmenhälfte (11) sitzende Glasplatte (19) hält.

11. Arbeitsprojektor nach einem oder mehreren der Ansprüche 1 bis 10, dadurch gekennzeichnet, daß in dem auf der Schreibplatte (7) aufliegenden unilaufenden Rand (11b) der unteren Rahmenhälfte (11) Lufteintrittsschlitze (11c) und in der oberen Rahmenhälfte (13) trichterförmige Luftaustrittsschlitze (13b) vorgesehen sind, daß in der unteren Rahmenhälfte (11) Kanäle (11e) und in den in den Rahmenhälften (11, 13) eingesetzten Halterahmen (14, 15) Aussparungen (14b, 15b) ausgebildet sind und daß die Kanäle (11e), die Aussparungen (14b, 15b) und die Luftaustrittsschlitze (13b) miteinander verbunden sind und Luftkanäle bilden.

## Revendications

1. Rétro-projecteur comprenant une plaque écritoire (7) sur laquelle est placé un dispositif d'affichage à cristaux liquides (16) qui est entouré par un cadre (10), qui est muni de couches polarisantes de la lumière sur ses deux faces et qui est équipé aussi d'une optique de projection (5) ainsi que d'une lampe et d'un réflecteur placés dans le boîtier du rétro-projecteur qui est caractérisé en ce que le cadre (10) a une surface (11a) dirigée vers la plaque écritoire (7) qui est réfléchissante et orientée selon un angle par rapport à la plaque écritoire tel que le rayonnement (9) émis par la lampe (22) et parvenant sur cette surface réfléchissante est renvoyé dans un espace libre à l'extérieur du boîtier.

2. Rétro-projecteur selon la revendication 1, caractérisé en ce que la surface réfléchissante (11a) du cadre est pourvue d'une couche réfléchissante (12).

3. Rétro-projecteur conforme à la revendication 1, caractérisé en ce que cette surface (11a) du cadre est un miroir.

4. Rétro-projecteur conforme à la revendication 1, caractérisé en ce que ce cadre (10) est constitué d'un élément inférieur (11) et d'un élément supérieur (13).

5. Rétro-projecteur conforme aux revendications 1 et 4, caractérisé en ce qu'un entourage de maintien (15) est logé dans l'élément supérieur (13) et est disposé de manière à affleurer avec la surface inférieure de l'élément supérieur (13).

6. Rétro-projecteur conforme à la revendication 5, caractérisé en ce que le dispositif d'affichage à cristaux liquides (16) est emprisonné dans l'entourage de maintien (15) de telle manière que sa face qui est à l'opposé de la lampe (22) porte un écran pelliculaire polarisant (17).

7. Rétro-projecteur conforme à la revendication 6, caractérisé en ce que l'écran pelliculaire polarisant (17) est placé sur une vitre (18) située à distance au-dessus de dispositifs d'affichage à cristaux liquides (16) et insérée dans l'élément (13) supérieur où elle est maintenue en place par l'entourage de maintien (15).

8. Rétro-projecteur conforme à l'une quelconque des revendications 4 à 7, caractérisé en ce qu'une vitre (19) est logée dans l'élément inférieur (11) et placée à distance du dispositif d'affichage à cristaux liquides (16), sa surface dirigée à l'opposé de la lampe (22) étant munie d'un écran pelliculaire polarisant (20) associé au dispositif (16).

9. Rétro-projecteur conforme à l'une quelconque des revendications 4 à 8, caractérisé en ce que la surface de la vitre (19) dirigée vers la lampe (22) est munie d'un écran absorbant les infra-rouges.

10. Rétro-projecteur conforme à la revendication 8, caractérisé en ce que l'entourage de maintien (14) est logé dans l'élément inférieur (11), affleure la surface supérieure de l'élément (11) et retient la vitre (19) placée dans celui-ci.

11. Rétro-projecteur conforme à l'une quelconque des revendications 1 à 10, caractérisé en ce que des fentes (11c) d'entrée d'air sont ménagées sur la marge (11b) de l'élément (11) destinée à reposer sur la plaque écritoire (7) et en ce que des fentes (13b) de sortie d'air en entonnoir sont ménagées sur l'élément supérieur (13), en ce que des chenaux (11e) sont ménagés dans l'élément inférieur (11) et des dégagements (14b et 15b) dans les entourages de maintien (14, 15) placés dans l'élément (11, 13) et en ce que les chenaux (11e), dégagements (14b, 15b) et fentes de sortie d'air (13b) communiquent et forment des canalisations d'air.
